# EUROPÄISCHE PATENTANMELDUNG

(11) **EP 1 661 901 A1**
(43) Veröffentlichungstag der Anmeldung: **31.05.2006**
(21) Anmeldenummer: 05022858.4
(22) Anmeldetag: 20.10.2005
(51) Int. Cl.: C07F 5/04

(54) **Verfahren zur simultanen Reaktiv- und Extraktivdestillation für die Herstellung von Borsäureestern**

(30) Priorität: 24.11.2004 DE 102004056673
(71) Anmelder: BASF Aktiengesellschaft, 67056 Ludwigshafen (DE)
(72) Erfinder: Miller, Christian, 67152 Ruppertsberg (DE); Spiske, Luise, Dr., 64342 Seeheim-Jugenheim (DE); Siegert, Markus, Dr., 69126 Heidelberg (DE)

(57) **Zusammenfassung**

Verfahren zur Herstellung von Borsäureestem ausgehend von Borsäure oder Bortrioxid durch Umsetzung mit Alkoholen in einer Kolonne, wobei man in der Kolonne einer Reaktivreaktifikation zumindest teilweise eine Extraktivdestillation überlagert.

## Beschreibung

Die vorliegende Erfindung betrifft ein verbessertes Verfahren zur Herstellung von Borsäureestern ausgehend von Borsäure oder Bortrioxid durch Umsetzung mit Alkoholen in einer Kolonne.

Die Synthese von Borsäuretrimethylester (TMB) kann ausgehend von Borsäure durch direkte Veresterung mit Methanol erfolgen. Aufgrund der ungünstigen Lage des chemischen Gleichgewichtes muss jedoch mindestens ein Reaktionsprodukt entfernt werden, um wirtschaftliche Umsätze erzielen (Kirk-Othmer, Encyclopedia of Chemical Technology, 2. Auflage (1964), Band 3, Seite 653) zu können.

Da sowohl TMB als auch Methanol leichter flüchtig als Wasser sind, kann das bei der Veresterung entstehende Wasser nicht wie bei anderen Veresterungen als Destillat abgetrennt werden. Bei den technisch bedeutsamen Herstellverfahren für TMB erfolgen daher durch destillative Abtrennung des Methylesters. TMB bildet mit Methanol unter Normaldruck ein Leichtsiederazeotrop bei 54°C mit einem Gehalt von 26 Gew.-% Ester. In Form diese Azeotrops lässt sich daher TMB wasserfrei aus dem Reaktionsgemisch abdestillieren.

US 2 217 354 schildert die Herstellung von TMB aus Borsäure und Methanol in einer Destillationsblase mit aufgesetzter Destillationskolonne, bei der das Azeotrop kontinuierlich über Kopf abgetrennt wird. Zum Erreichen von wirtschaftlichen Ausbeuten wird jedoch ein hoher Methanolüberschuß (Beispiel 1, 8,3 mol Methanol auf 1 mol Borsäure), eine hohe Trennstufenzahl sowie ein hohes Rücklaufverhältnis (am Ende bis zu 600) benötigt.

Bei dem in US 2 813 115 beschriebenen Verfahren wird die Veresterungsreaktion kontinuierlich in einer Kolonne durchgeführt. Die Ausgangsstoffe werden in Form einer methanolischen Lösung von Borsäure oder Bortrioxid in der Mitte der Kolonne eingeleitet. Das Molverhältnis Methanol zu Borsäure liegt bei größer 4,2. Am Kolonnenkopf wird ein wasserfreies Gemisch von TMB und Methanol abgezogen. Am Kolonnensumpf wird das überschüssige Methanol zusammen mit Wasser abgezogen und einer weiteren Destillationskolonne voneinander getrennt.

DE 3324419 beschreibt ein verbessertes kontinuierliches Verfahren zur Herstellung von TMB in einer Kolonne bei dem der Methanolüberschuß soweit reduziert werden kann, dass am Kolonnesumpf im wesentlichen nur Wasser und nichtumgesetzte Borsäure aber kein Methanol mehr anfällt, so dass auf die Trennung zwischen Wasser und Methanol komplett verzichtet werden kann. Das Verfahren ist dadurch gekennzeichnet, dass die Umsetzung in einer Kolonne mit mindestens 15 Trennstufen durchgeführt wird, wobei Wasser aus dem Sumpf entnommen wird und ein Anteil der Sumpfflüssigkeit dem Sumpf entzogen und oberhalb des Sumpfes in die Kolonne zurückgeführt wird. Die Erfindung dieser DE 3324419 geht von der Beobachtung aus, dass die Reaktion autokatalytisch durch die Borsäure selbst katalysiert wird. Für hohe Rektionsgeschwindigkeiten muss deshalb die Borsäure im gesamten Reaktionsbereich in katalytisch wirksamen Konzentrationen vorliegen. Über die für die Reaktion und die Bildung des Azeotrops benötigte Menge an Methanol kann bei diesem Verfahren verzichtet werden, so dass die sonst erforderliche Kolonne für die Methanol/Wassertrennung nicht benötigt wird.

Zur Abtrennung des Methanols aus dem TMB wurde bereits eine Vielzahl an verschiedenen Trennverfahren ausgearbeitet.

Eine Möglichkeit besteht darin, dass man dass Azeotrop durch Zweidruckdestillation bricht (J. Tyurikov et al., Fiz.-Khim. Osnovy Rektifikatsii 1970, S. 261-267). Infolge der unterschiedlichen Verdampfungswärmen von Methanol und TMB ist die azeotrope Zusammensetzung druckabhängig. Bei einem Druck von 20,6 bar hat das Azeotrop zum Beispiel ein Methanolanteil von 71 Mol.-%, der deutlich über dem Molanteil bei Normaldruck (48 Mol.-%) liegt. Durch Destillation bei abwechselnd niedrigem und hohem Druck ist es möglich beide Komponenten vollständig voneinander zu trennen. In der bei niedrigen Druck betriebenen ersten Kolonne fällt als Sumpfprodukt reines Methanol an. In der zweiten bei höherem Druck betriebenen Kolonne fällt im Sumpf das reine TMB an, während ein methanolreiches Gemisch über Kopf zur ersten Destillationskolonne zurückgeführt wird. Nachteilig an diesem Verfahren ist der hohen Investions- und Energieaufwand.

Die destillative Trennung mit einem Zusatzstoff, der mit Methanol ein leichteres Azeotrop als das Azeotrop Methanol/TMB bildet, ist eine weitere in der Literatur beschriebene Trennmethode (H. Schlesinger et al., J.Am.Chem.Soc. Band 75 (1953), S. 213-215). Als Zusatzstoffe kommen insbesondere Schwefelkohlenstoff, Pentan, 2-Methylpenten, 2,3-Dimethylbutan und Methylenchlorid in Betracht. Nachteilig an diesem Verfahren ist die erforderliche Abtrennung des Zusatzstoffs, was wiederum zu hohen Energie- und Investitionskosten führt.

Neben den oben beschriebenen destillativen Trennverfahren ist auch die Trennung mit Molekularsieben bekannt (Ullmanns Enzyklopädie der technischen Chemie, 4. Auflage, Band 8, S. 653-654). Dies führt zwar zu einem niedrigeren Energiebedarf, hat allerdings eine wesentlich schwierigere technische Durchführbarkeit zur Folge.

Die physikalische Trennung des Azeotrops kann auch durch Kristallisation bei Temperaturen von -35 bis -55°C erfolgen (DE 1168881). Die TMB-Kristalle werden dabei abfiltriert und vom anhaftendem Methanol durch Destillation befreit. Das Filtrat kann in den kontinuierlichen Prozess zurückgeführt werden.

Die Abtrennung des Methanols kann auch kontinuierlich durch ein Membranverfahren erfolgen (US 3230245). Dabei wird das Azeotrop bei 140°F und 100 Tor durch eine Membran aus Cellulosetriacetat geleitet, in der das Methanol besser löslich ist.

Eine andere Trennmethode besteht in der Zugabe anorganischer Salze, insbesondere Chloride (GB 818062). Dabei tritt Phasentrennung auf, bei der die Unterschicht Methanol und Salz und die Oberschicht TMB mit nur geringen Mengen an Methanol enthält, die vom Ester destillativ einfach abtrennbar sind. Der technischen Nutzung steht jedoch die schwierige Handhabung der salzhaltigen Unterschicht entgegen.

Als technisch bedeutsame Trennmethode ist insbesondere die Flüssig-/Flüssig-Extraktion zu nennen. In der Literatur sind verschiedene Methoden beschrieben, bei denen Methanol aus dem Azeotrop Methanol/TMB durch Extraktion mit konzentrierter Schwefelsäure (DE 1126365) oder Mineralölen (US 2 944 076) extrahiert wird. Durch anschließende Destillation kann das Methanol wieder aus dem Extraktionsmittel entfernt werden. Nachteilig an diesem Verfahren sind jedoch die nicht zu vermeidende Ausbeuteverluste.

In DE 3126111 ist ein Verfahren zu Gewinnung von TMB aus methanolhaltigen Gemischen durch Extraktivdestillation mit Dimethylformamid (DMF) beschrieben. Dabei wird die gute Lösungsmitteleigenschaft N-alkylierter Säureamide für Methanol zur Trennung ausgenutzt, wenn man anstelle einer reinen Flüssig/Flüssig-Extraktion eine Extraktivdestillation vorsieht. Dabei wird ein beliebiges Gemisch von Borester und Methanol sowie das Extraktionsmittel DMF einer mit Füllkörpern bestückten Kolonne zugeführt. Der Borester wird dabei in reiner Form als Kopfprodukt gewonnen, während Methanol und das Extraktionsmittel am Sumpf der Kolonne anfällt. Die Aufarbeitung des Extraktionsmittels erfolgt in einer weiteren Kolonne, bei der über Kopf Methanol und über Sumpf das Extraktionsmittel gewonnen wird. Das Methanol kann in die Veresterungs- und das Extraktionsmittel in die Extraktionsanlage zurückgeführt werden. Dabei erwies sich insbesondere Dimethylformamid als hochwirksames Extraktionsmittel.

Die in der Literatur beschriebenen Verfahren zur Veresterung von Borsäure und Methanol zu TMB weisen jedoch den Nachteil auf, das in einem ersten Schritt in der Veresterung das Wertprodukt als Azeotrop anfällt, so dass in einem oder mehreren weiteren Schritten des Edukt Methanol vom Produkt TMB aufwendig getrennt werden muss. Ein weiterer Nachteil besteht darin dass Methanol im stöchiometrischen Überschuß bezogen auf die Borsäure zugeführt werden muss. Als Minimalmenge an Methanol ist dabei die stöchiometrische Menge plus die im Azeotrop vorhandenen Methanolmenge zu nennen. Das kleinste in der Literatur beschriebene Molverhältnis Methanol zu Borsäure liegt daher bei 3,7.

Der Erfindung lag daher die Aufgabe zugrunde, ein verbessertes Verfahren zur Veresterung von Borsäure bzw. Bortrioxid und Methanol zu finden, das die Nachteile des Stands der Technik vermeidet und welches die entsprechenden Produkte in hohen Selektivitäten, mit hohen Umsätzen sowie mit geringem Aufarbeitungsaufwand liefert.

Die Umsetzung und die Azeotroptrennung sollte dabei vorteilhafterweise in einem einzigen Apparat durchführbar sein, wobei hohe Produktselektivitäten bezüglich beider Reaktionspartner (Methanol und Borsäure bzw. Bortrioxid) bei möglichst kurzen Reaktionszeiten erreicht werden sollen. Insbesondere sollte vermieden werden, dass zur Erzielung hoher Selektivitäten ein Reaktant in großen Überschuss eingesetzt und nach der Reaktion wieder abgetrennt werden muss.

Dementsprechend wurde ein Verfahren zur Herstellung von Borsäureestern ausgehend von Borsäure oder Bortrioxid durch Umsetzung mit Alkoholen in einer Kolonne gefunden, welches dadurch gekennzeichnet ist, dass man in der Kolonne einer Reaktivreaktifikation zumindest teilweise eine Extraktivdestillation überlagert. Es ist insbesondere von Vorteil die Reaktivrektifikationszone vollständig mit der Extraktion zu überlagern und direkt überhalb der Reaktionszone ein Extraktivrektifikationszone ohne Reaktion anzuordnen.

Mit dem erfindungsgemäßen Verfahren können die Edukte bei vollständigem Umsatz beider Edukte im stöchiometrischen Verhältnis eingesetzt werden, so dass kein weiterer Aufarbeitungsschritt zur Aufreinigung des Produktes TMB notwendig wird. Durch dieses Verfahren kann TMB in hochreiner Form mit einer Reinheit von > 99,9% und einem Methanolgehalt von < 100 ppm erhalten werden.

Das erfindungsgemäße Verfahren lässt sich prinzipiell auf alle chemischen Synthesen anwenden, die mittels Kombination von Reaktion und Destillation mit anschließender Azeotroptrennung durchgeführt werden. Besondere Bedeutung besitzt das Verfahren jedoch für die Veresterung von Borsäure mit Methanol zu Borsäuretrimethylester (TMB).

Darüber hinaus wird bei dem erfindungsgemäßen Verfahren das Reaktionsprodukt sofort aus dem Reaktionsgemisch entfernt, so dass Folgereaktionen vermieden werden und dadurch die Ausbeute erhöht wird. Hierdurch wird die Gleichgewichtseinstellung positiv beeinflußt und die destillative Aufarbeitung des Reaktionsaustrags wesentlich vereinfacht.

Das erfindungsgemäße Verfahren kann kontinuierlich oder diskontinuierlich durchgeführt werden, wobei die bevorzugte Ausführungsform das kontinuierliche Verfahren ist.

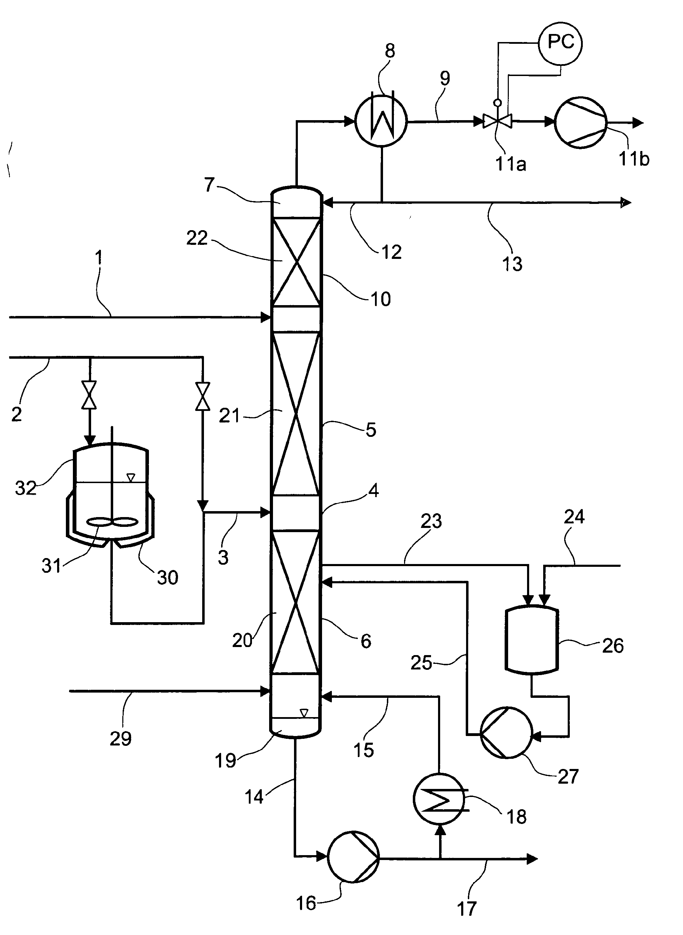

Eine vorteilhafte Durchführung des erfindungsgemäßen Verfahrens wird nachfolgend anhand der Figur 1 exemplarisch beschrieben.

Das erfindungsgemäße Verfahren wird zweckmäßigerweise so durchgeführt, dass man die Borsäure, Methanol, das Extraktionsmittel und gegebenenfalls einen Katalysator über die Zuläufe (3) und (1) auf die Einbauten einer als Reaktions- und Extraktionskolonne fungierenden Kolonne (4) dosiert. Zumindest ein Teil des Extraktionsmittel wird getrennt von den Reaktionsedukten oberhalb der leichter siedenden Reaktanten mit dem Zulauf (1) in die Kolonne (4) eingespeist. Die Edukte werden über den Zulauf (2) dem Reaktionssystem zudosiert. Da die Borsäure im stöchiometrischen Verhältnis zum Alkohol in der Reaktionsmischung nicht löslich ist, kann es von Vorteil sein, ein Teil des Extraktionsmittels zusammen mit den Reaktanden zu vermischen um eine vollständige Lösung der Borsäure zu erreichen. Ein Teil der Borsäure kann jedoch auch in einem Vorreaktor (32) zum Produkt umgewandelt werden, so dass der nichtumgesetzte Teil an Borsäure in Lösung geht. Der Vorreaktor kann dabei kontinuierlich oder diskontinuierlich betrieben werden. Durch eine Temperierung auf eine Temperatur von 40 bis 100°C mittels eines Wärmeüberträgers (30) und der Einstellung einer Verweilzeit zwischen 1 und 120 Minuten, bevorzugt 30 bis 90 Minuten wird unter Rühren mittels Rührer (31) ein Teil der Börsäure zum Produkt umgesetzt, so dass das die restliche Borsäure in Lösung geht. Die Reaktionsmischung die aus Borsäure, Alkohol, Extraktionsmittel und Reaktionsprodukt in wechselnden Anteilen bestehen kann, wird nun über den Zulauf (3) in die Kolonne dosiert.

Der Druck am Kolonnenkopf (7) wird so eingestellt, dass die Temperatur im Sumpf (19) zwischen 100 und 200°C, bevorzugt zwischen 120 und 140°C liegt. Je nach Stoffsystem kann dies mit einer Vakuumpumpe (11 b) und/oder einer Druckregeleinrichtung (11a) geschehen.

Auf den Einbauten (20) der Kolonne (4) findet die Reaktion der Borsäure mit dem Alkohol statt. Durch die überlagerte Rektifikation werden die gebildeten Reaktionsprodukte dem Reaktionsgleichgewicht und der Reaktionszone kontinuierlich entzogen. Der dabei entstehende Borsäureester gelangt dabei zum Teil als Leichtsiederazeotrop mit dem Alkohol in den Extraktionsteil (5) der Kolonne. Das schwersiedenes Reaktionsprodukt Wasser gelangt in den Sumpf (19) der Kolonne und wird über den Strom (14) abgezogen. Die überlagerte Rektifikation sorgt also einerseits für eine positive Beeinflussung des Reaktionsgleichgewichts und andererseits für eine Verhinderung von Folgereaktionen und damit für hohe Selektivitäten.

Im Extraktionsteil (5) der Kolonne wird im Gegenstrom mit einem Massenverhältnis von 1-10, bevorzugt von 2 bis 4 (bezogen auf das Reaktionsgemisch) das Extraktionsmittel über den Zulauf (1) zugegeben. Hierdurch wird der im Azeotrop enthaltene Alkohol extrahiert und gelangt zusammen mit dem Extraktionsmittel in die Reaktionszone (6), wo er wieder mit Borsäure zum Borsäureester reagieren kann. Das Extraktionsmittel gelangt als Schwersieder in den Sumpf (19) der Kolonne. Die Extraktion und Azeotroptrennung beschränkt sich somit nicht auf den Extraktionsteil (5) sondern findet vorteilhafterweise auch im Reaktionsteil (6) der Kolonne statt. Auf den Einbauten (20) der Kolonne findet somit simultan Reaktion, Destillation und Extraktion statt, so dass der Extraktionsteil (5) der Kolonne im Vergleich zur getrennten Reaktivdestillation und Extraktion um bis zu 50% kleiner dimensionert werden kann.

Das schwersiedende Reaktionsprodukt sammelt sich zusammen mit dem Extratkionsmittel im Sumpf (19) der Kolonne (4) an und wird mittels einer Pumpe (16) zusammen mit eventuell nicht umgesetzten Reaktanten über den Sumpfstrom (14) abgezogen. Ein Teil des Sumpfstroms (14) wird mit einem Verdampfer (18) verdampft und über die Brüdenleitung (15) in die Kolonne geführt. Hierdurch wird der für die Destillation erforderliche Brüden erzeugt. Es ist möglich, zur Entfernung von leichtsiedenden Komponenten zusätzlich ein Inertgas in den Sumpf der Kolonne einzuspeisen.

Die Kolonne (4) besteht in der Regel aus mehreren Zonen mit unterschiedlichen Funktionen. Auf den Kolonneneinbauten der Reaktionszone (20) zwischen den Zulaufstellen (3) und (29) der Kolonne (4) erfolgt im wesentlichen die Umsetzung der Reaktanten mit simultaner destillativer Entfernung der entstehenden Produkte sowie simultaner extraktiver Azeotroptrennung. Oberhalb des Segments (6) befinden sich die Extraktionszone (5) die mit extraktiv wirkenden Trennelementen (21) versehen sind. In dieser Zone wird nichtumgesetzter Alkohol aufgrund des thermodynamischen Gleichgewichts mit dem Extraktionsmittel wieder in die Reaktionszone (6) gefördert. Der Borsäureester hingegen gelangt in die obere Trennzone (10), die mit destillativen Trennelementen (22) versehen ist. In der oberen Trennzone wird das leichtersiedende Reaktionsprodukt (TMB) vom Extraktionsmittel getrennt. Bei ausreichender Trennstufenzahl (z.B. bei Verwendung von DMF als Extraktionsmittel 5 bis 10 theoretische Stufen), kann so der Borsäureseter in hochreiner Form ohne zusätzlichen Trennapparat erhalten werden.

Am Kopf der Kolonne (7) reichert sich der Borsäureester an. Dieses wird in den Kondensator (8) geführt, auskondensiert und über die Leitung (13) ausgeschleust. Ein Teil des Kondensats wird als Rücklauf (12) wieder auf die Kolonne gegeben. Auf diese Weise kann durch den internen Rücklauf in der Kolonne ein vorteilhaftes Konzentrationsprofil eingestellt werden.

Es sollte ein Rücklaufverhältnis zwischen 0 und 100, vorzugsweise zwischen 0,1 und 2 eingestellt werden.

In der Reaktionszone (6) werden als Einbauten (20) vorteilhaft Metallgewebepackungen oder Blechpackungen mit geordneter Struktur oder aber Füllkörperschüttungen als Kolonneneinbauten verwendet. Es kann jedoch auch vorteilhaft traditionelle Destillationsböden wie Siebböden oder Böden mit hoher Verweilzeit der Flüssigkeit wie beispielsweise Ventilböden, bevorzugt Glockenböden oder verwandte Bauarten wie zum Beispiel Tunnelböden oder Thormannböden, installiert werden.

Die Veresterung von Borsäure verläuft autokatalytisch. Zur Erzielung eines vollständigen Umsatzes bei sehr hoher Selektivität ist beim erfindungsgemäßen Verfahren keine homogene oder heterogene Katalysatorzugabe notwendig. Um Apparategrößen zu reduzieren oder bei einem anderen Stoffsystem kann es jedoch auch von Vorteil sein, die Reaktion durch die Zugabe eines sauren homogen oder heterogen vorliegenden Katalysator zu unterstützen bzw. durchzuführen. Die bevorzugte Ausführungsform ist jedoch die autokatalytische Reaktion ohne Katalysatorzugabe.

Bei Verwendung eines Katalysator können für das erfindungsgemäße Verfahren prinzipiell alle in der Literatur für Umesterungen genannten homogene und heterogene Katalysatoren, wie zum Beispiel alle Arten von protischen Säuren wie Schwefelsäure, Sulfonsäuren aber auch metallisches Natrium, HCl-Gas, Alkalisalze mehrprotoniger Säuren, SiO₂ TiO₂, ZrO₂ Bleicherde, ZnCl₂, lonentauscher, MgCl, Zeolithe und sonstige Katalysatoren verwendet werden.

Bei Verwendung von heterogener Katalysatoren kann dieser auf Böden untergebracht werden oder als Katalysatorschüttung in der Reaktionszone (6) installiert werden. Es ist jedoch auch möglich Katalysator enthaltende Packungen, wie z.B. Montz MULTI-PAK® oder Sulzer KATAPAK® , zu verwenden oder den Katalysator in Form von Füllkörpern in die Kolonne einzubringen. Weiterhin ist es möglich katalytisch aktive Destillationspackungen oder mit Katalysator gefüllte Gewebetaschen (sogenannte Bales oder Texas-Tea-Bags) einzusetzen. Eine andere Ausführungsform bei der heterogenen Katalyse ist die Verwendung von Katalysatorpackung in die Katalysatorteilchen lose unter der Einwirkung der Schwerkraft eingebracht verteilt und wieder ausgetragen werden (Vgl. WO 03/047747), wobei die Katalysatorpackung erste und zweite Teilbereiche aufweist, wobei im ersten Teilbereich der Packung die Katalysatorteilchen lose unter der Einwirkung der Schwerkraft eingebracht verteilt und wieder ausgetragen werden, im zweiten Teilbereich jedoch aufgrund der geometrischen Verhältnisse im Vergleich zum Katalysatorteilchen keine Katalysatorteilchen eingebracht werden können (vgl. WO 03/047747).

In der Extraktionszone (5) und in der oberen Destillationszone (10) werden vorzugsweise Kolonneneinbauten mit hoher Stoffaustauschwirkung wie Metallgewebepackungen oder Blechpackungen mit geordneter Struktur, wie zum Beispiel Sulzer Mellapak, Sulzer BX, Montz B1-Typen oder Montz A3-Typen, verwendet.

Im erfindungsgemäßen Verfahren wurde gefunden, dass der durch eine Packung im Reaktionsteil (6) bereitgestellte Flüssigkeitshold-up für eine vollständige Umsetzung der Borsäure ausreichend viel Verweilzeit zur Verfügung stellt. Je nach Apparatekonstruktion oder Stoffsystem kann es jedoch sinnvoll sein, den Hold-up von wenigen Volumenprozent auf bis zu 30 Volumenprozent zusätzlich zu erhöhen. Dies kann zum Beispiel dadurch realisiert werden, dass ein Teilstrom durch einen oder mehrere Seitenabzüge (23) aus der Fraktionierkolonne (4) durch den oder die Behälter (26) geleitet wird und mit Hilfe je einer Pumpe (27) die diese Behälter verlassenden Teilströme (25) wieder in die Kolonne (4) zurückgeführt werden. Die Behälter können mit heterogenem Katalysator gefüllt werden. In die Behälter (26) können mit Hilfe einer Zuleitung (24) gegebenenfalls zusätzlicher Katalysator und/oder Reaktanten dosiert werden. Die Beheizung der Behälter (26) ist sinnvoll.

Es hat sich als vorteilhaft erwiesen, wenn die Wärmezufuhr in das Reaktionssystem mittels Kolonnensumpf (19), Kolonne (4) und gegebenenfalls Behälter (26) nicht nur über den Verdampfer (18) erfolgt, sondern zusätzlich über außenliegende Wärmetauscher oder über sich direkt auf den Kolonneneinbauten befindliche Wärmetauscher erfolgt. Hierdurch wird vorteilhafterweise eine Reduktion des gesamten Energiebedarfs erreicht. Des weiteren ist die Einspeisung von Direktdampf zum Energieeintrag über die Zuleitung (29) möglich.

Zur Durchführung der Umsetzung verwendet man mit Vorteil Fraktionierkolonnen, die mit ihren Einbauten 15 bis 150 theoretische Trennstufen, vorzugsweise zwischen 45 und 80 theoretische Stufen aufweisen. Als besonders vorteilhaft hat es sich erwiesen, wenn 5 bis 60 theoretische Trennstufen, vorzugsweise 20 bis 40 theoretische Trennstufen, in der Reaktionszone (6) unter dem Zulaufstrom (3), 5 bis 60 theoretische Trennstufen, vorzugsweise 20 bis 30 theoretische Trennstufen, in der Extraktionszone und 0 bis 30, vorzugsweise 5 bis 10 theoretische Trennstufen, im oberen Teil der Kolonne (10) überhalb des Zulaufstroms (1), vorgesehen werden.

### Beispiel 1:

### Herstellung von Trimethylborat (TMB) durch Veresterung von Borsäure mit Methanol

### A. Beschreibung der Apparatur

Die Versuchsapparatur bestand aus einem beheizbaren Naturumlaufverdampfer aus Glas, auf den eine Destillationskolonne (Länge: 2 m, Durchmesser: 50 mm) aufgesetzt war. Die Kolonne war im unteren Bereich (Reaktionszone (6)) mit 15 Segmenten einer strukturierten Gewebepackung vom Typ EX der Firma SULZER (Gesamthöhe: 75 cm) im mittleren Bereich (Extraktionszone (5)) mit 10 Segmenten einer strukturierten Gewebepackung vom Typ EX der Firma SULZER (Gesamthöhe: 50 cm) und im oberen Bereich (Trennzone (10)) mit 5 Segmenten einer strukturierten Gewebepackung vom Typ EX der Firma SULZER (Gesamthöhe: 25 cm) gefüllt. Die Kolonne war in regelmäßigen Abständen mit Thermoelementen bestückt, so dass außer im Sumpf und am Kopf der Kolonne an jeder 3. bis 4. theoretischen Stufe die Temperatur gemessen werden konnte. Zusätzlich zum Temperaturprofil konnte mit Hilfe entsprechender Probennahmestellen das Konzentrationsprofil in der Kolonne ermittelt werden.

Die Reaktanten wurden aus auf Waagen stehenden Vorlagebehältern mit einer Pumpe massen-stromgeregelt in die Kolonne dosiert. Der Verdampfer (18), der mit Hilfe eines Thermostaten auf 178°C beheizt wurde, hatte während des Betriebs je nach Verweilzeit ein Hold-up zwischen 50 und 150 ml. Der Sumpfstrom (17) wurde aus dem Verdampfer mit einer Pumpe standgeregelt in einen auf einer Waage stehenden Behälter gefördert. Der Kopfstrom (7) der Kolonne wurde in einem Kondensator (8), der mit einem Kryostaten betrieben wurde, auskondensiert. Ein Teil (13) des Kondensats lief über einen Rücklaufteiler in einen auf einer Waage stehenden Vorlagebehälter, während der andere Teil (12) als Rücklauf auf die Kolonne gegeben wurde. Die Apparatur war mit einer Druckregelung (11) ausgestattet und auf einen Systemdruck von 1,2 bar ausgelegt. Alle ein- und austretenden Stoffströme wurden während des gesamten Versuchs mit einem PLS kontinuierlich erfaßt und registriert. Die Apparatur wurde im 24-Stunden-Betrieb gefahren (Stationarität).

### B. Versuchsdurchführung

Direkt überhalb der Extraktionszone wurde kontinuierlich 350 g/h Dimethylformamid in die Kolonne dosiert. Etwa 50 cm unterhalb des oberen Zulaufs wurden kontinuierlich 150 g/h Reaktionsmischung bestehend aus 18.8 Gew.-% Borsäure, 29.2 Gew.-% Methanol und 52.0 Gew.-% Dimethylformamid in die Kolonne gepumpt. Es wurde ein Systemdruck von 1 bar und ein Rücklaufverhältnis von 0,3 kg/kg eingestellt. Die Sumpftemperatur betrug 129°C. Als Sumpfstrom der Kolonne wurden 419 g/h mit 95.9 Gew.-% Dimethylformamid, 3.8 Gew.-% Wasser und 0.1 Gew.-% Borsäure abgezogen. Am Kopf der Kolonne wurden 31 g/h Produkt bestehend aus 99.3 Gew.-% Trimethylborat 0.7 Gew.-% Methanol abgezogen. Es wurde Trimethylborat mit einer Selektivität von 98 % bezogen auf die Borsäure erhalten. Der Borsäureumsatz betrug 98%.

### Beispiel 2:

### Herstellung von Trimethylborat (TMB) durch Veresterung von Borsäure mit Methanol

### A. Beschreibung der Apparatur

Die Versuchsapparatur bestand aus einem beheizbaren Naturumlaufverdampfer aus Glas, auf den eine Destillationskolonne (Länge: 2 m, Durchmesser: 50 mm) aufgesetzt war. Die Kolonne war im unteren Bereich (Reaktionszone (6)) mit 15 Segmenten einer strukturierten Gewebepackung vom Typ EX der Firma SULZER (Gesamthöhe: 75 cm) im mittleren Bereich (Extraktionszone (5)) mit 20 Segmenten einer strukturierten Gewebepackung vom Typ EX der Firma SULZER (Gesamthöhe: 100 cm) und im oberen Bereich (Trennzone (10)) mit 5 Segmenten einer strukturierten Gewebepackung vom Typ EX der Firma SULZER (Gesamthöhe: 25 cm) gefüllt. Die Kolonne war in regelmäßigen Abständen mit Thermoelementen bestückt, so dass außer im Sumpf und am Kopf der Kolonne an jeder 3. bis 4. theoretischen Stufe die Temperatur gemessen werden konnte. Zusätzlich zum Temperaturprofil konnte mit Hilfe entsprechender Probennahmestellen das Konzentrationsprofil in der Kolonne ermittelt werden.

Die Reaktanten wurden aus auf Waagen stehenden Vorlagebehältern mit einer Pumpe massen-stromgeregelt in die Kolonne dosiert. Der Verdampfer (18), der mit Hilfe eines Thermostaten auf 178°C beheizt wurde, hatte während des Betriebs je nach Verweilzeit ein Hold-up zwischen 50 und 150 ml. Der Sumpfstrom (17) wurde aus dem Verdampfer mit einer Pumpe standgeregelt in einen auf einer Waage stehenden Behälter gefördert. Der Kopfstrom (7) der Kolonne wurde in einem Kondensator (8), der mit einem Kryostaten betrieben wurde, auskondensiert. Ein Teil (13) des Kondensats lief über einen Rücklaufteiler in einen auf einer Waage stehenden Vorlagebehälter, während der andere Teil (12) als Rücklauf auf die Kolonne gegeben wurde. Die Apparatur war mit einer Druckregelung (11) ausgestattet und auf einen Systemdruck von 1,2 bar ausgelegt. Alle ein- und austretenden Stoffströme wurden während des gesamten Versuchs mit einem PLS kontinuierlich erfaßt und registriert. Die Apparatur wurde im 24-Stunden-Betrieb gefahren (Stationarität).

### B. Versuchsdurchführung

Direkt überhalb der Extraktionszone wurde kontinuierlich 350 g/h Dimethylformamid in die Kolonne dosiert. Etwa 100 cm unterhalb des oberen Zulaufs wurden kontinuierlich 150 g/h Reaktionsmischung bestehend aus 18.8 Gew.-% Borsäure, 29.2 Gew.-% Methanol und 52.0 Gew.-% Dimethylformamid in die Kolonne gepumpt. Es wurde ein Systemdruck von 1 bar und ein Rücklaufverhältnis von 0,5 kg/kg eingestellt. Die Sumpftemperatur betrug 130°C. Als Sumpfstrom der Kolonne wurden 420 g/h mit 95.7 Gew.-% Dimethylformamid, 3.8 Gew.-% Wasser und 0.2 Gew.-% Borsäure abgezogen. Am Kopf der Kolonne wurden 30 g/h Produkt bestehend aus 99.9 Gew.-% Trimethylborat 0.1 Gew.-% Methanol abgezogen. Es wurde Trimethylborat mit einer Selektivität von 99 % bezogen auf die Borsäure erhalten. Der Borsäureumsatz betrug 96%.

## Patentansprüche

1. Verfahren zur Herstellung von Borsäureestern ausgehend von Borsäure oder Bortrioxid durch Umsetzung mit Alkoholen in einer Kolonne, **dadurch gekennzeichnet, dass** man in der Kolonne einer Reaktivreaktifikation zumindest teilweise eine Extraktivdestillation überlagert.

2. Verfahren nach Anspruch 1, **dadurch gekennzeichnet, dass** man die Reaktion und Extraktion kontinuierlich durchführt und bei der Umsetzung mindestens eines der Reaktionsprodukte aus dem Reaktionsgemisch destillativ abtrennt.

3. Verfahren nach Anspruch 1, **dadurch gekennzeichnet, dass** man die Reaktion und Extraktion semi- oder diskontinuierlich durchführt und bei der Reaktion mindestens eines der Reaktionsprodukte aus dem Reaktionsgemisch destillativ abtrennt.

4. Verfahren gemäß Anspruch 2 oder 3, **dadurch gekennzeichnet, dass** man die Reaktionspartner so einstellt, dass die Umsetzung der Reaktanden auf den Einbauten und gegebenenfalls im Sumpf der Kolonne erfolgt.

5. Verfahren gemäß einen der Anspruche 1 bis 4, **dadurch gekennzeichnet, dass** man zumindest ein Teil des Extraktionsmittel oberhalb der Zulaufs der Reaktanden in die Kolonne gibt.

6. Verfahren gemäß einen der Anspruche 1 bis 4, **dadurch gekennzeichnet, dass** man zumindest ein Teil des Extraktionsmittel zusammen mit den Reaktanden in die Kolonne gibt.

7. Verfahren gemäß einen der Anspruche 1 bis 4, **dadurch gekennzeichnet, dass** man Teile des Extraktionsmittels sowohl zusammen mit den Reaktanden als auch getrennt davon im oberen in die Kolonne gibt.

8. Verfahren gemäß einem der Ansprüche 6 bis 8, **dadurch gekennzeichnet** das man als Extraktionsmittel ein zumindest teilweises unpolares Lösungsmittel wie Oktan, Nonan, Dekan, Toluol, Benzol oder Xylol oder ein Lösungsmittel das mit dem Alkohol eine stärkere physikalische oder chemische Wechselwirkung eingeht wie Dimethylacetamid, Hexandiol, Butandiol, Triethanolamin, Ethanolamin, Acetamid, Glycerol, N-Methyl-Pyrrolidon, Ethylenglykol, bevorzugt ein Carbonsäurealkylamid, besonders bevorzugt Dimethylformamid verwendet.

9. Verfahren gemäß einem der Ansprüche 6 bis 8, **dadurch gekennzeichnet** das man als Extraktionsmittel ein Lösungsmittel, das mit dem Alkohol eine starke physikalische oder chemische Wechselwirkung eingeht, wie Dimethylacetamid, Hexandiol, Butandiol, Triethanolamin, Ethanolamin, Acetamid, Glycerol, N-Methyl-Pyrrolidon, Ethylenglykol, bevorzugt ein Carbonsäurealkylamid, besonders bevorzugt Dimethylformamid, verwendet

10. Verfahren gemäß einen der Ansprüche 1 bis 9, **dadurch gekennzeichnet, dass** man die Umsetzung durch Gegenwart eines homogenen Katalysators, bevorzugt einer protonischen Säure, verstärkt.

11. Verfahren gemäß einem der Ansprüche 1 bis 9, **dadurch gekennzeichnet, dass** man die Umsetzung in Gegenwart eines heterogenen Katalysators, der auf den Einbauten oder als Einbauten einer Kolonne oder in einem der Kolonne parallel geschalteten Verweilzeitbehälter installiert wird, verstärkt.

12. Verfahren gemäß Anspruch 11, **dadurch gekennzeichnet, dass** als heterogener Katalysator ein Oxid der 4. Haupt- oder Nebengruppe des Periodensystems wie SiO₂, TiO₂ oder ZrO₂ verwendet wird.

13. Verfahren gemäß Anspruch 11, **dadurch gekennzeichnet, dass** als heterogener Katalysator Bleicherde, ZnCl₂, lonentauscher, MgCl oder ein Zeolith verwendet wird.

14. Verfahren gemäß einem der Ansprüche 1 bis 13, **dadurch gekennzeichnet, dass** man den höher siedenden Reaktanten, gegebenenfalls zusammen mit dem homogenen Katalysator, oberhalb des tiefer siedenden Reaktanten in die Kolonne einspeist.

15. Verfahren gemäß einem der Ansprüche 1 bis 14, **dadurch gekennzeichnet, dass** die Wärmezufuhr in das Reaktorsystem bestehend aus Kolonnensumpf und Fraktionierkolonne und gegebenenfalls Behälter nicht nur über den Verdampfer erfolgt, sondern zusätzlich über außenliegende Wärmetauscher oder über sich direkt auf den Kolonneneinbauten befindlichen Wärmetauschern erfolgt.

16. Verfahren nach einem der Ansprüche 1 bis 15, **dadurch gekennzeichnet, dass** als Reaktionsedukt Borsäure mit einem unverzweigten oder verzweigten, gesättigten C₂ bis C₁₀-Alkohohl umgesetzt wird.

17. Verfahren nach einem der Ansprüche 1 bis 16, **dadurch gekennzeichnet, dass** als Alkohol Methanol, Ethanol oder Propanol und deren Isomere verwendet wird.
